(19)

**Europäisches Patentamt**
**European Patent Office**
**Office européen des brevets**

(11) **EP 1 558 456 B1**

(12) **EUROPEAN PATENT SPECIFICATION**

(45) Date of publication and mention
of the grant of the patent:
**02.05.2007  Bulletin 2007/18**

(51) Int Cl.:
**B60K 28/16** *(2006.01)*     **B60K 17/348** *(2006.01)*

(21) Application number: **03751701.8**

(22) Date of filing: **15.10.2003**

(86) International application number:
**PCT/SE2003/001599**

(87) International publication number:
**WO 2004/039621 (13.05.2004 Gazette 2004/20)**

(54) **ROAD FRICTION INDICATOR FOR ALL WHEEL DRIVE ROAD VEHICLES**

STRASSENREIBWERTANZEIGE FÜR STRASSENFAHRZEUGE MIT ALLRADANTRIEB

INDICATEUR DE FRICTIONS DE ROUES POUR TOUS VEHICULES ROUTIERS A ROUES MOTRICES

(84) Designated Contracting States:
**DE ES FI FR GB IT**

(30) Priority: **31.10.2002  SE 0203225**

(43) Date of publication of application:
**03.08.2005  Bulletin 2005/31**

(73) Proprietor: **Nira Dynamics AB**
**583 30 Linköping (SE)**

(72) Inventors:
• **FORSSELL, Urban**
**S-586 66 Linköping (SE)**

• **GUSTAFSSON, Fredrik**
**S-586 66 Linköping (SE)**
• **STENMAN, Anders**
**S-582 29 LInköping (SE)**

(74) Representative: **Herbjörnsen, Rut et al**
**Albihns Stockholm AB**
**P.O. Box 5581**
**114 85 Stockholm (SE)**

(56) References cited:
**DE-A1- 3 735 673      DE-A1- 19 732 554**
**US-A- 4 896 738       US-A- 5 406 486**
**US-A- 5 501 109       US-A- 5 944 392**
**US-A- 6 094 614**

**Description**

Technical Field

The present invention relates in general to a support system in a road vehicle, and in particular to a system for determining the road friction of an all wheel drive road vehicle.

Background

In order to enhance safety and performance in modern road vehicle technology, road vehicles are to an increasing extent equipped with support systems for determining different critical driving parameters. One such driving parameter is the currently available friction between the road and a tire of the vehicle. The knowledge about the road friction parameter is usually utilised in improving brake control or traction force control on driving wheels. Another use is for warning the driver of a potentially slippery and dangerous road condition.

Another type of safety-enhancing systems in road vehicles is all wheel drive (AWD) systems. AWD systems enhance vehicle stability, especially under slippery and wet driving conditions, and are currently offered as standard or optional equipment in many road vehicles. Several types of AWD systems exist, e.g. systems with a fixed torque transfer ratio between the front and rear axles like the Torsen differential used in Audi's Quattro vehicles. There are also systems with controllable and/or varying torque transfer ratio like the Haldex LSC ® used in some of Volkswagen's and Volvo's AWD vehicles. Other examples of AWD systems are found in products from Toyota, from ProDrive and from Borg-Warner.

Prior Art

A theoretical background is found in the prior art publication "Slip-based Tire-Road Friction Estimation", Automatica, Vol. 33, No. 6, pp. 1087-1099, 1997, by Fredrik Gustafsson. In this piece of prior art it is shown how to construct an algorithm that can estimate the available friction in a 2WD vehicle (2WD = 2 wheel drive).

An example of similar ideas but applied to braking vehicles can be found in the publication "Slip-based tire-road friction estimation during braking" by Steffen Müller, Michael Uchanski, and Karl Hedrick (2001 ASME International Engineering Congress and Exposition).

Prior art is based on knowledge of the vehicle speed in order to be able to compute a wheel slip. In for example a 2WD vehicle the vehicle speed is normally available and derivable or deducible from a non-driven wheel. In all wheel drive (AWD) vehicles there is no available vehicle speed that is sufficiently reliable for the purpose of determining the available or actual friction between tire and road.

Object of the Invention

The general object of the present invention is to solve the problem of determining the available friction between a tire and a surface of a vehicle where there is no readily available vehicle speed.

An aspect of the problem is to determine such friction in an all wheel drive road vehicle, in particular where the vehicle speed is not directly derivable or deductible from wheel speed signals and thus unknown.

Summary of the Invention

The above stated object is achieved and the problem is solved in the invention on a general level by combining information on the applied traction force or torque and information on the resulting wheel slip. More specifically, the solution is to combine slip information for at least two different driven wheels and information on the traction force derived by means of an à priori known torque distribution between these wheels.

The slip information is preferably generated by means of rotational (angular) wheel speed information from angular wheel speed sensors of each of said wheels. The torque distribution between the wheels is preferably known from a technical specification of the current all wheel drive system of the vehicle. An estimate of the available friction between the surface and the tire is computed in accordance with a predetermined model dependent on said wheel slip information and said torque distribution.

The invention is in different embodiments realised as hardware, software or a combination thereof. The currently preferred embodiment is realised as a computer program product executed on a data processing system that takes inputs from sensors of the vehicle.

Brief Description of Drawings

The invention will be further explained in conjunction with the accompanying drawings, in which:

Fig1 shows slip curves for different road surfaces;
Fig 2 - Fig 5 show plotted curves resulting from simulations of an embodiment of the invention, wherein

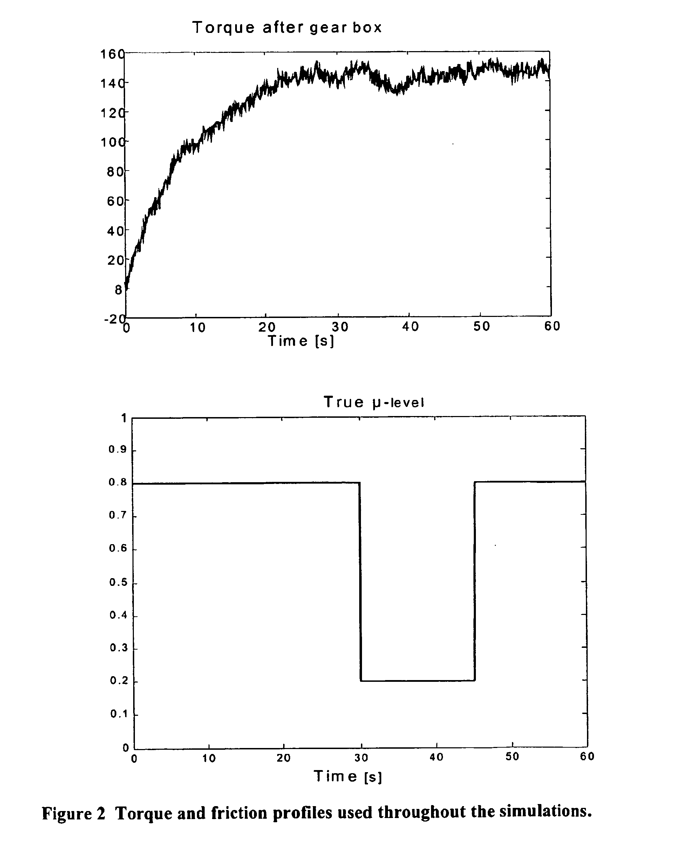

Fig 2 shows torque and friction profiles;

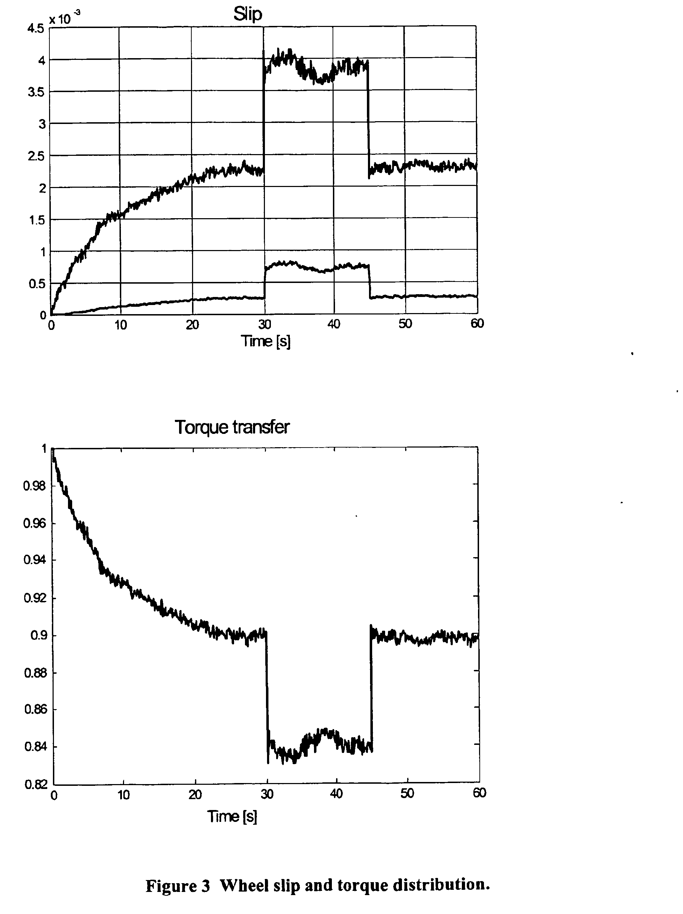

Fig 3 shows estimated slip curve parameters for different constant torque distributions;

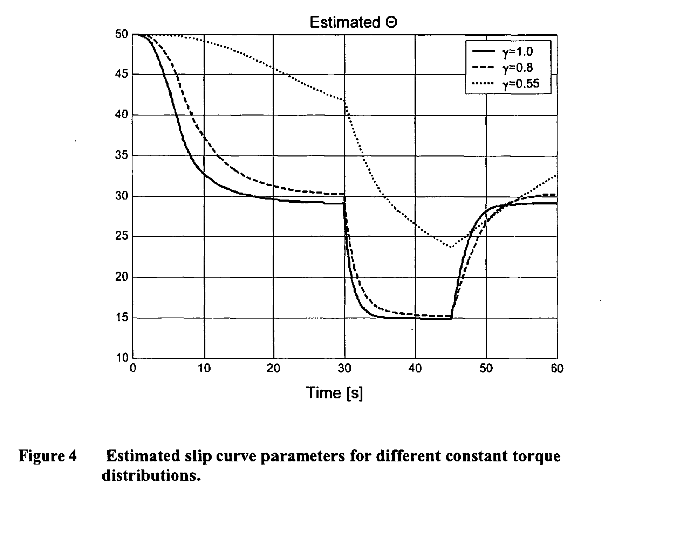

Fig 4 shows estimated slip curve parameter using a varying torque distribution;

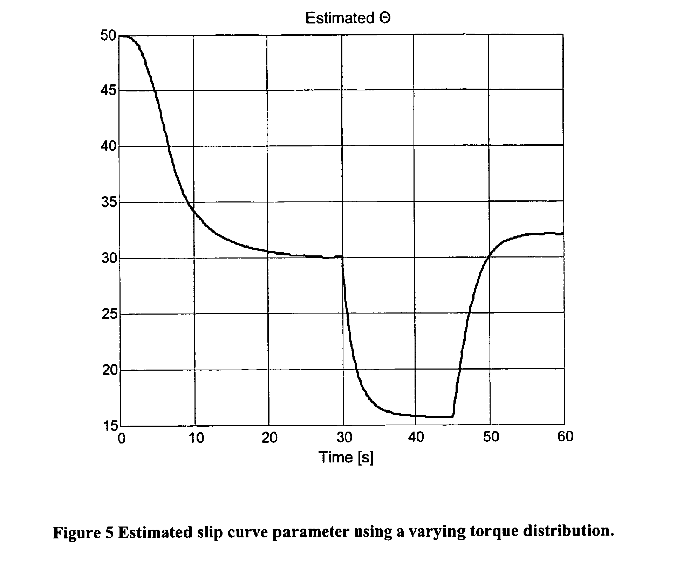

Fig 5 shows wheel slip and torque distribution;

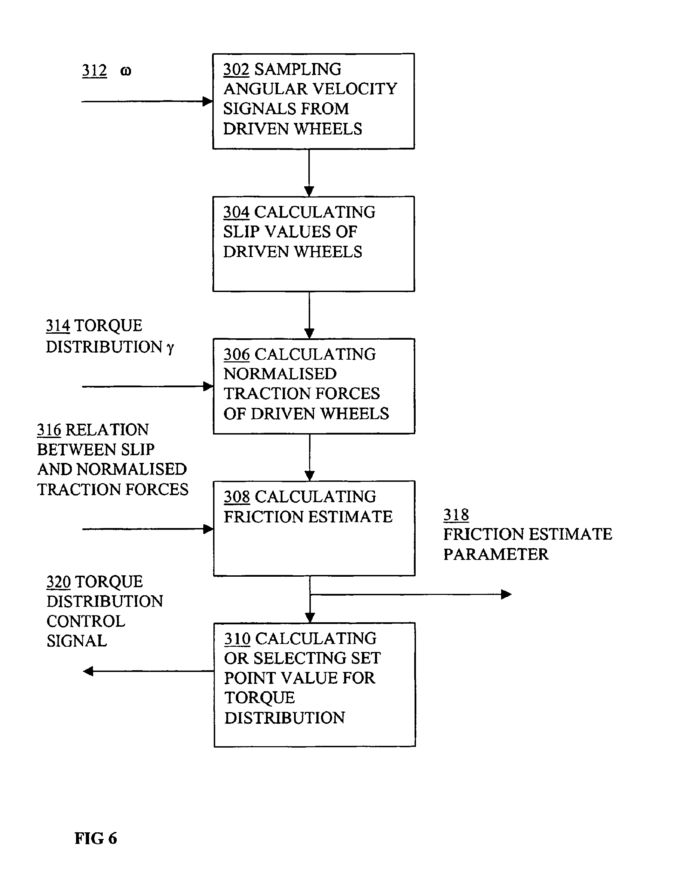

Fig 6 shows a schematic block diagram/flow chart of the functional blocks and steps of an embodiment of the invention; and

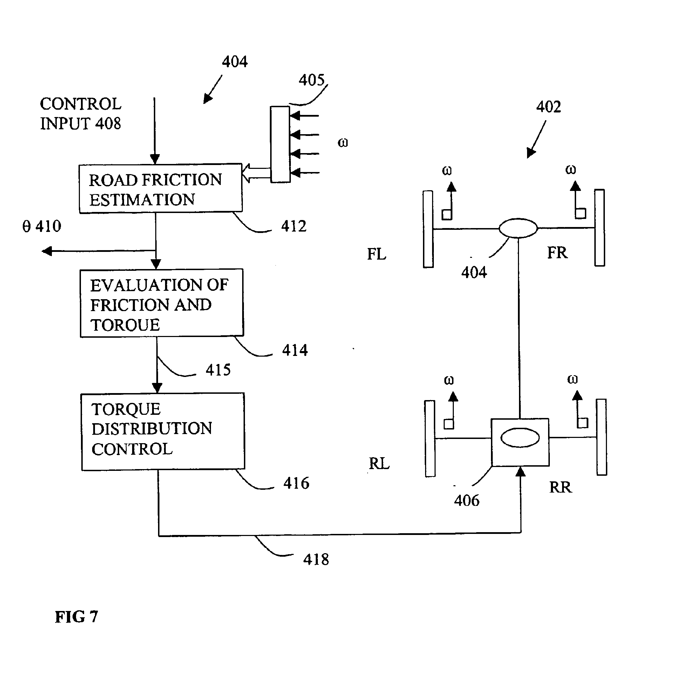

Fig 7 shows a schematic block diagram/flow chart of road friction estimation combined with a transmission coupling with variable torque distribution in a 4WD vehicle.

Detailed Description of Embodiments

General Concept

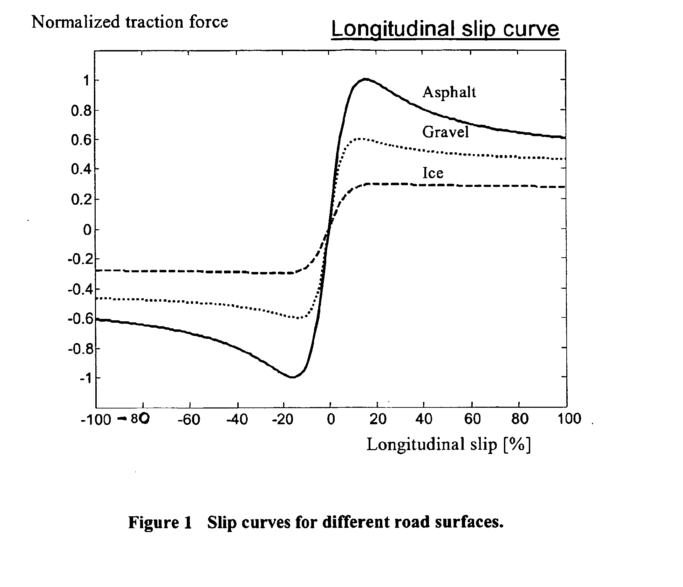

The invention is based on the concept of wheel slip in relation to a road surface. This relation is usually presented as the longitudinal slip in percentage as a function of the normalised traction force applied to the wheel, which results in the so-called slip curve. There are different slip curves for different surfaces, such as asphalt, gravel and ice for a road vehicle wheel as shown in Fig 1. To be more stringent, the slip occurs between a tire of the wheel and surface that is in contact with the tire. However, in this text wheel and tire will be used as synonyms in this sense for the purposes of the invention.

The basic assumption is that the wheel slip s, defined as $s = (\omega \cdot r - v)/v$, and the normalised traction force $\mu$ are related to each other according to $\mu = f(s)$. Here $\omega$ is angular wheel velocity, $r$ is wheel radius and $f(\cdot)$ is a non-linear mapping. The interesting quantity to estimate for this purpose is the peak value of $f(\cdot)$, i.e., $\mu_F = \sup |f(s)|$, which is the maximum available friction for the surface in question. However, the lack of excitation, i.e. only small to moderate slip values are available during normal driving, generally makes it hard to estimate the peak value. The underlying approach taken in the road friction estimation of the invention is to estimate parameters that controls the shape of the slip curve in a region around $\mu=0$ (e.g., the slip slope and the slip offset) using a parameterised model of the slip curve. The peak value, thus corresponding to the available friction, is then computed using the applied model and the resulting parameter estimates.

In the AWD case (all wheel drive case) there is the problem aspect of computing a reliable estimate of the available friction without having reliable knowledge of the vehicle speed. This is due to the fact that in the AWD case all wheels slip and therefore any calculation of the vehicle speed based on the rotational speed of driven wheels renders an erroneous estimate of the true vehicle speed. Cf. the prior art section above. The solution to this problem aspect and the idea behind this invention is to modify the underlying approach to manipulate all known relations (i.e. equations) and variables in order to achieve a reliable estimate of the available friction in an AWD vehicle.

In a general embodiment this is done by combining vehicle speed $v$ dependent slip equations $\mu = f(s)$ for two different wheels, typically one front wheel and one rear wheel, and by replacing the vehicle speed $v$ in one of the equations using an expression for $v$ obtained by manipulating the other equation. This solves the problem with the unknown reference velocity. However, a new problem aspect is introduced. Namely, by substituting $v$ in one equation (for example the one for the front wheel) with an expression for $v$ obtained using the other equation (for the rear wheel) a new equation is obtained. This new equation contains the normalised traction forces for both wheels (or wheel axles) not just the currently studied wheel (or wheel axle) for which the available friction is to be determined. However, in accordance with the invention a model in the shape of an equation system dependent on the torque distribution between the wheels (or wheel axles) is specified. By utilising à priori knowledge of this torque distribution an estimation of the available friction is calculated from the equation system. The à priori knowledge of the torque distribution is usually known from technical specifications of modern commercially available AWD systems, for example the Haldex LSC.

General Implementation Example

In an embodiment of the invention applied on an AWD vehicle having a front wheel axle and a rear wheel axle, the general concept or idea of the invention outlined above is as follows.

Form the measured slip via the expression

$$s_m = \frac{\omega_f - \omega_r}{\omega_r}$$

where $\omega_f$ and $\omega_r$ are the angular velocities of the front $f$ and rear $r$ wheels, respectively. Measured values for these angular velocities are preferably taken from existing angular velocity sensors in the vehicle. Let $T$ denote the total available torque after the gearbox. Then by assuming that the torque distribution between the front and rear axles is

$$T_f = \gamma T$$

$$T_r = (1 - \gamma)T$$

with $\gamma \in [0,1]$ being a known torque transfer parameter, the normalised traction forces can be computed as

$$\mu_{f,m} = \frac{T_f}{2r_f N_f}$$

$$\mu_{r,m} = \frac{T_r}{2r_r N_r}$$

where $r_f$, $r_r$, $N_f$ and $N_r$ are the wheel radius and the normal forces at the front and rear axles, respectively.

By eliminating the unknown velocity $v$ in the slip equations for the front and rear wheels, it can be shown that they reduce to

$$s_f = \frac{\omega_f r_f}{\omega_r r_r}(s_r + 1) - 1$$

$$s_r = \frac{\omega_r r_r}{\omega_f r_f}(s_f + 1) - 1$$

By further manipulations it can then be shown that the measured slip $s_m$ and the true slip expressions $s_f$ and $s_r$ are related as

$$s_m \cong \frac{s_f - s_r}{s_r + 1} + \delta$$

where $\delta$ is the relative difference in radii between the front and real wheel, i.e.

$$\delta = \frac{r_r - r_f}{r_r}.$$

Furthermore, we also have

$$\mu = f(s) \Leftrightarrow s = f^{-1}(\mu),$$

so that the measured slip and the normalised traction forces are related to each other according to

$$s_m = \frac{f_f^{-1}(\mu_{f,m}) - f_r^{-1}(\mu_{r,m})}{f_r^{-1}(\mu_{r,m}) + 1} + \delta$$

This can be reformulated as

$$s_m = g(\mu_{f,m}, \mu_{r,m}, \theta_f, \theta_r, \delta),$$

where $g(\cdot)$ is a non-linear mapping and $\theta_f$ and $\theta_r$ are parameters controlling the shapes of the front and rear slip curves near $\mu = 0$. This expression can be further simplified by assuming that the tire/road friction properties of the front and rear wheels are similar. This renders

$$s_m = g(\mu_{f,m} - \mu_{r,m}, \theta),$$

i.e. it is only the difference in normalised traction force that matters. As before it is assumed that $\theta$ depends on the maximum friction, i.e.,

$$\theta = \theta(\mu_F).$$

From these formulas and equations it is clear that the quality of the estimated $\theta$ depends critically on the quality of the torque distribution $\gamma$ and is therefore used as an estimate of the maximum available friction. However, note that $\gamma$ = 1 corresponds to the FWD (front wheel drive) case while $\gamma$ = 0 corresponds to the RWD (rear wheel drive) case. If $\gamma$ = 0.5 constantly then $\theta$ cannot be estimated due to lack of identifiability, i.e. there is no useful information in the signals in this case, which can be used to estimate the unknown parameter $\theta$. As $\gamma$ approaches the value 0.5 the SNR tends to zero, which makes it more and more difficult to estimate the slip slope. One possible remedy in such a situation is to enhance the level of excitation by requesting changes in the torque distribution. However, if $\gamma$ varies, as is the case with many modern AWD systems, $\theta$ can be estimated albeit that the accuracy of the estimate will be best near the FWD or RWD situations, i.e. near $\gamma$ = 1 and $\gamma$ = 0, respectively.

The friction parameter $\theta$ can optionally be translated to a suitable scale of values in order to adapt the friction estimation for presentation to a human user or for use in controlling other functional parts of the vehicle.

Detailed Embodiment

The parameterisation g(.) used in the previous section is general and can be made arbitrarily complex. However, for practical use in an on-line implementation in a vehicle, this function should preferably have a simple form. A reasonable assumption is that there for small slip values is a linear relation between slip $s(t)$ and normalised traction force $\mu(t)$, according to

$$s_f(t) = \mu_f(t)\theta_f$$

$$s_r(t) = \mu_r(t)\theta_r$$

where indices $f$ and $r$ indicate front and rear axles respectively. These expressions can be utilised to form regression models for the unknown parameters $\theta_f$ and $\theta_r$. By further manipulations of the formulas it can be shown that the relation between the true slip and the measured slip is

$$s_m(t) \approx s_f(t) - s_r(t) + \delta$$

where $\delta$ is the relative difference in radii between the front and real wheels.

A straightforward parameterisation suitable for estimation is therefore the model

$$s_m(t) = s_{f,m}(t) = \begin{pmatrix} \mu_f(t) & -\mu_r(t) & 1 \end{pmatrix} \begin{pmatrix} \theta_f \\ \theta_r \\ \delta \end{pmatrix}.$$

Another perhaps more preferred approach is to assume that the parameters $\theta_f$ and $\theta_r$, and hence the slip curves, are the same at both the front and the rear wheel, i.e., $k_f = k_r$. This renders the model

$$s_m(t) = s_{f,m}(t) = \begin{pmatrix} \mu_f(t) - \mu_r(t) & 1 \end{pmatrix} \begin{pmatrix} \theta \\ \delta \end{pmatrix},$$

which is general and also holds for FWD and RWD vehicles.

The friction parameter $\theta$ can be estimated both at the left and right side of the vehicle. This implies several degrees of freedom in forming the final friction estimate. One approach is to consider the minimum value, i.e.,

$$\theta = \min(\theta_l, \theta_r).$$

Another approach is to consider the average value, that is,

$$\theta = (\theta_l + \theta_r)/2.$$

Fig 6 shows schematically in a combined block diagram and flow diagram functions and steps of an embodiment of the invention. Thus, an angular velocity signal $\omega$ 312 comprising values velocity signals for the angular velocity of driven wheels is input into sampling stage 302. Possibly, the angular velocity signals are received in a digital form from an existing digital system. In stage 304 slip values of driven wheels are calculated and output to stage 306. In stage 306 normalised traction forces of driven wheel are calculated dependent on the calculated slip values and dependent on an input or prestored value 314 of the current torque distribution between axles of the driven wheels. In stage 308 a friction estimate is calculated dependent on the calculated normalised traction forces and on a predetermined or prestored relation between slip and normalised traction forces. One or more friction estimate parameters 318 are output from stage 308, on one hand possibly for direct presentation or use and on the other hand possibly to stage 310 present in embodiments of the invention. In stage 310 a set point value for torque distribution between driven axles or wheels is generated by calculation or by selection from a prestored table, and a torque distribution control signal is output for use in controlling a transmission coupling with a variable torque distribution between driven axles. The set point value is calculated or selected for example dependent on the current torque distribution in order to achieve a torque distribution that enables an accurate estimation of the available friction in current driving circumstances. The set point value for the torque distribution can also be calculated or selected dependent on the estimated friction estimate in order to achieve an improved driving situation with regard to slipping wheels.

A AWD Embodiment

Fig 7 shows an exemplifying embodiment of an all wheel drive AWD vehicle having a transmission coupling with a variable torque distribution between driven axles and driven wheels. In fig 7, a schematic drawing of a 4-wheeled AWD vehicle 402 having front left FL, front right FR, rear left RL and rear right RR driven wheels. The vehicle 402 has a front transmission coupling 404 devised for distribution of torque between the front left and front right driven wheels, and a rear transmission coupling 406 devised for distribution of torque between rear left and rear right driven wheels. The transmission coupling arrangement is further provided with functionality for varying the torque distribution between the front and rear transmission couplings. In one variety also the front and rear transmission couplings are respectively provided with functionality for varying the torque distribution between left and right wheels.

An AWD transmission coupling suitable for the purpose of the invention with friction estimation combined with a transmission coupling having variable torque distribution between driven wheel axles is for example designed in accordance with the transmission coupling Haldex LSC®. Such a construction comprises three functional main parts, viz. a hydraulic pump driven dependent on the slip between the axles/wheels, a wet multi-plate clutch and a controllable throttle valve with an electronic control devise. The coupling unit can be viewed as a hydraulic pump, where the housing and an annular piston are connected to a first axle shaft and a piston actuator is connected to the a second axle shaft. The two shafts are connected via the wet multi-plate clutch pack, which is normally unloaded and thus transfers no torque between the axle shafts. When both shafts are rotating at the same speed, there is no pumping action. Immediately as a speed difference occurs, the pumping is actuated and starts to generate oil pressure. As this is a piston pump there is virtually instant reaction with no low speed pumping loss. The oil flows to a clutch piston thus compressing the clutch pack and braking the speed difference between the axles. The oil returns to the reservoir via a controllable throttle valve, which controls the oil pressure and the force on the clutch package. In traction, i.e. usually high slip conditions a high pressure is delivered, while in tight curves, i.e. parking, or at high speeds a much lower pressure is provided.

Again referring to fig 7, angular wheel speed sensors at each wheel delivers angular velocity signals $\omega$ that are collected in an input stage 405 of a friction estimator 404. The friction estimator comprises in stage 412 a road friction estimation functionality that receives as an input the angular velocity values and possibly a control input 408 such as driving case information, desired torque distribution, or predetermined or prestored technical parameters. The road friction estimation stage 412 comprises functionality for friction estimation in accordance with above described embodiments and outputs a friction estimate in the shape of a friction dependent parameter $\theta$ 410. The friction parameter $\theta$ 410 is preferably available for presentation or use and is also input to stage 414. In stage 414 there is functionality for evaluating friction and torque distribution and for outputting a request signal 415 for a desired torque distribution dependent on predetermined or dynamically input parameters. The request signal 415 is input to a torque distribution control stage 416 that delivers a torque distribution control signal 418 to the transmission couplings 406, 404. The transmission coupling arrangement in its turn varies the torque distribution in accordance with the control signal 418.

Simulation Results

For the sake of illustrating the performance and the technical effect of the invention this section describes the result of simulations of the estimation model applied during straight-ahead driving of an AWD vehicle. Using a simple dynamic model together with the torque and friction profiles shown in Fig 2 has generated artificial data for the simulation.

Starting the simulation study by considering constant torque distributions, Fig 3 shows the estimated $\theta$ using the values $\gamma = 1$ (corresponding to a FWD vehicle), $\gamma = 0.8$ and $\gamma = 0.55$. The plot in Fig 3 shows that the ability to estimate the $\theta$ parameter decreases as the torque distribution $\gamma$ approaches the value 0.5. In the degenerated case where $\gamma \equiv 0.5$, the $\theta$ parameter cannot be estimated at all due to lack of identifiability.

A perhaps a more interesting simulation than the previous one is to assume that the torque distribution front/rear is a function of the actual slip. This is the principle the most modern AWD system utilises. Fig 4 shows the estimated $\theta$ for an exemplifying choice of such a function. The wheel slip for the front wheel (upper curve) and rear wheel (lower curve) and the resulting torque distribution are shown in Fig 5.

These simulations show that the friction parameter is estimated accurately by means of the invention as long as the torque distribution between the front and rear wheel axles is not equal. As mentioned above, the identifiability can however be improved by allowing the friction estimation algorithm to request changes in the $\gamma$ parameter.

Practical implementations

A practically implemented embodiment of the invention preferably comprises computer program code portions comprising program code adapted to perform the mathematical operations described above. These operations are performed dependent on input parameters from rotational wheel speed sensors and on a predetermined possibly variable torque transfer parameter describing the torque distribution between a first and a second wheel or wheel axle.

The computer program code portions are preferably loaded in a digital data processing unit and adapted to direct the data processing unit to perform the steps and functions of the invention. Values of input parameter are repetitively sampled and processed to calculate and output an estimation of the currently available friction between the road and a specific wheel. This is performed for all wheels of the vehicle or for a selection of the wheels. The output estimation is in different embodiments for example used for brake control, anti-slip control, alarms or the like.

It should be noted that the above embodiments are described as examples of the invention. So for example, there are different combinations of first and second wheels and of parameters for first and second wheels in the calculations and equations. In the above examples specific configurations of front and rear wheels are selected and presented, but it should thus be noted that other such configurations are conceivable. Other examples of such configurations are first wheel front right, second wheel front left; first wheel rear right, second wheel rear left; first wheel rear, second wheel front and so on. Thus, the indices $f$ and $r$ in the equations are generally interchangeable with the indices first (1) and second (1).

Different Anplications

The invention is advantageously applied in different kinds of road vehicles, but can also be applied in other wheel vehicles such as robots or trucks.

**Claims**

1. A method for determining friction between a surface and a tire of a driven wheel in a wheeled vehicle having a first and a second driven wheel, comprising the steps of:

   - calculating slip values (304) of a first and a second driven wheel dependent on the angular velocity (312) of said first and second driven wheels;
   - calculating normalised traction forces (306) of said first and second driven wheels dependent on the torque distribution (314) between said first and second driven wheels;
   - calculating a friction estimate $\theta_1$, $\theta_2$ (308) for each of said first and second driven wheels dependent on a predetermined relation between said calculated slip (304) and said calculated normalised traction forces (306).

2. The method of claim 1, wherein said slip values are calculated in a manner corresponding to the difference between the angular velocity (312) of said first and second driven wheel, respectively, divided with the angular velocity of said second driven wheel.

3. The method of any of the preceding claims, wherein said slip values $s_m$ are calculated in a manner corresponding to the relation

$$s_m = \frac{\omega_f - \omega_r}{\omega_r},$$

where $\omega_f$ and $\omega_r$ are the rotational speeds of the front and rear wheels, respectively.

4. The method of any of the preceding claims, wherein said normalised traction forces $\mu$ are calculated in a manner corresponding to the relations

$$\mu_{f,m} = \frac{T_f}{2rN_f}$$

$$\mu_{r,m} = \frac{T_r}{2rN_r}$$

where $r$, $N_f$ and $N_r$ are the wheel radius and the normal forces at the front and rear wheel axles, respectively.

5. The method of any of the preceding claims, wherein said friction estimates are calculated by means of a relation between the slip and the normalised traction force dependent on the difference between the normalised traction forces of said first and second driven wheels, respectively.

6. The method of any of the preceding claims, wherein said friction estimates are calculated by means of a linear relation between slip $s(t)$ and normalised traction force $\mu(t)$ of said first and second driven wheels, respectively, corresponding to

$$s_f(t) = \mu_f(t)\theta_f$$

$$s_r(t) = \mu_r(t)\theta_r$$

where indices f and r indicate front and rear wheel axles, respectively.

7. The method of the preceding claim, wherein the friction estimate parameters $\theta_f$ and $\theta_r$ are determined by means of a regression model.

8. The method of any of the preceding claims, wherein the calculation of the slip is further improved in a manner corresponding to the relation between the true slip $s_m$ and the measured slip $s_f, s_r$

$$s_m(t) \approx s_f(t) - s_r(t) + \delta \,,$$

where $\delta$ is the relative difference in radii between the front and real wheel,

$$\text{i.e.}\ \delta = \frac{r_r - r_f}{r_r}\,.$$

9. The method of any of the preceding claims, wherein the estimation of the friction is calculated based on a model corresponding to

$$s_m(t) = s'_{f,m}(t) = \begin{pmatrix} \mu_f(t) & -\mu_r(t) & 1 \end{pmatrix} \begin{pmatrix} \theta_f \\ \theta_r \\ \delta \end{pmatrix},$$

where $\delta$ is the relative difference in radii between the front and real wheel,

$$\text{i.e. } \delta = \frac{r_r - r_f}{r_r}.$$

10. The method of any of the preceding claims, wherein it is assumed that the slip slope is the same at both said first and the second driven wheels, and wherein the estimation of the friction is calculated based on a model corresponding to

$$s_m(t) = s_{f,m}(t) = \left(\mu_f(t) - \mu_r(t) \quad 1\right)\begin{pmatrix}\theta \\ \delta\end{pmatrix},$$

where $\delta$ is the relative difference in radii between the front and real wheel,

$$\text{i.e. } \delta = \frac{r_r - r_f}{r_r}.$$

11. The method of any of the preceding claims, wherein the torque distribution is changed when torque distribution values are in the range of 0.5.

12. The method of any of the preceding claims, wherein a value for a desired torque distribution is generated dependent on the current torque distribution between said first and second driven wheel.

13. The method of any of the preceding claims, wherein a value for a desired torque distribution is generated dependent on the current available friction for said first and second driven wheel.

14. The method of any of the preceding claims, wherein a value for a desired torque distribution is generated and input to a torque distribution variation mechanism in a transmission coupling with a variable torque distribution.

15. The method of any of the preceding claims, wherein said first and second driven wheels are front wheels and rear wheels, respectively, in a four-wheel drive vehicle.

16. An apparatus for determining friction between a surface and a tire of a driven wheel in a wheeled vehicle having a first and a second driven wheel, comprising means for performing the steps and functions of any of the preceding claims.

17. A computer program product for determining friction between a surface and a tire of a driven wheel in a wheel vehicle having a first and a second driven wheel, comprising computer program code portions adapted to direct a data processing system to perform the steps and functions of any of the preceding claims.

18. A transmission coupling for distribution of a torque between first and second wheel axles in a wheeled vehicle (402) having a first and a second driven wheel, the transmission coupling (404,406) having a mechanism for varying the distribution of torque between said first and second wheel axles and a control mechanism for controlling said variation of torque distribution, wherein said control mechanism comprises:

   - means for determining friction between a surface and a tire of a driven wheel in said wheeled vehicle;
   - means for calculating slip values of a first and a second driven wheel dependent on the angular velocity of said first and second driven wheels;
   - means for calculating normalised traction forces of said first and second driven wheels dependent on the torque distribution between said first and second driven wheels;
   - means for calculating a friction estimate $\theta_1, \theta_2$ (404) for each of said first and second driven wheels dependent on a predetermined relation between said calculated slip and said calculated normalised traction forces

- means (416) for evaluating said friction and current torque distribution between said first and second wheel axles.

19. The transmission coupling of the preceding claim, further comprising means for generating a torque distribution control signal (418) dependent on said friction and said current torque distribution.

20. The transmission coupling of the preceding claim, wherein said torque distribution control signal (418) is input to the mechanism for varying the distribution of torque.

21. The transmission coupling of any of the preceding claims 18 to 21, further comprising means for performing the steps and functions of any of the claims 1-17.


**Patentansprüche**

1. Verfahren zum Bestimmen von Reibung zwischen einer Oberfläche und einem Reifen eines angetriebenen Rades bei einem mit Rädern versehenen Fahrzeug, das ein erstes und ein zweites angetriebenes Rad hat, wobei es die folgenden Schritte umfasst:

   Berechnen von Schlupfwerten (304) eines ersten und eines zweiten angetriebenen Rades in Abhängigkeit von der Winkelgeschwindigkeit (312) der ersten und der zweiten angetriebenen Räder;
   Berechnen normalisierter Traktionskräfte (306) der ersten und der zweiten angetriebenen Räder in Abhängigkeit von der Drehmomentverteilung (314) zwischen den ersten und den zweiten angetriebenen Rädern;
   Berechnen eines Reibungs-Schätzwertes $\theta_1$, $\theta_2$ (308) jeweils für die ersten und die zweiten angetriebenen Räder in Abhängigkeit von einer vorgegebenen Beziehung zwischen dem berechneten Schlupf (304) und den berechneten normalisierten Traktionskräften (306).

2. Verfahren nach Anspruch 1, wobei die Schlupfwerte auf eine Weise berechnet werden, die der Differenz zwischen der Winkelgeschwindigkeit (312) des ersten bzw. des zweiten angetriebenen Rades dividiert durch die Winkelgeschwindigkeit des zweiten angetriebenen Rades entspricht.

3. Verfahren nach einem der vorangehenden Ansprüche, wobei die Schlupfwerte $s_m$ auf eine Weise berechnet werden, die der Beziehung

$$s_m = \frac{\omega_f - \omega_r}{\omega_r}$$

entspricht, wobei $\omega_f$ und $\omega_r$ die Drehgeschwindigkeiten der Vorder- bzw. Hinterräder sind.

4. Verfahren nach einem der vorangehenden Ansprüche, wobei die normalisierten Traktionskräfte $\mu$ auf eine Weise berechnet werden, die den Beziehungen

$$\mu_{f,m} = \frac{T_f}{2rN_f}$$

$$\mu_{r,m} = \frac{T_r}{2rN_r}$$

entsprechen, wobei r, $N_f$ und $N_r$ der Radradius und die Normalkräfte an der Vorder- bzw. Hinterradachse sind.

5. Verfahren nach einem der vorangehenden Ansprüche, wobei die Reibungs-Schätzwerte mittels einer Beziehung zwischen dem Schlupf und der normalisierten Traktionskraft in Abhängigkeit von der Differenz zwischen den normalisierten Traktionskräften der ersten bzw. der zweiten angetriebenen Räder berechnet werden.

6. Verfahren nach einem der vorangehenden Ansprüche, wobei die Reibungs-Schätzwerte mittels einer linearen Beziehung zwischen Schlupf s(t) und normalisierter Traktionskraft $\mu$(t) der ersten bzw. der zweiten angetriebenen Räder entsprechend

$$s_f(t) = \mu_f(t)\theta_f$$

$$s_r(t) = \mu_r(t)\theta_r$$

berechnet werden, wobei Indizes f und r Vorder- bzw. Hinterradachse anzeigen.

7. Verfahren nach dem vorangehenden Anspruch, wobei die Reibungs-Schätzwert-Parameter $\theta_f$ und $\theta_r$ mittels eines Regressionsmodells bestimmt werden.

8. Verfahren nach einem der vorangehenden Ansprüche, wobei die Berechnung des Schlupfes weiter auf eine Weise berechnet wird, die der Beziehung zwischen dem wahren Schlupf $s_m$ und dem gemessenen Schlupf $s_f, s_r$

$$s_m(t) = s_f(t) - s_r(t) + \delta$$

entspricht, wobei $\delta$ die relative Differenz zwischen dem Vorder- und dem Hinterrad bezüglich der Radien ist,

$$\text{d. h. } \delta = \frac{r_r - r_f}{r_r}.$$

9. Verfahren nach einem der vorangehenden Ansprüche, wobei der Schätzwert der Reibung auf Basis eines Modells entsprechend

$$s_m(t) = s'_{f,m}(t) = \begin{pmatrix} \mu_f(t) & -\mu_r(t) & 1 \end{pmatrix} \begin{pmatrix} \theta_f \\ \theta_r \\ \delta \end{pmatrix}$$

berechnet wird, wobei $\delta$ die relative Differenz zwischen dem Vorder- und dem Hinterrad bezüglich der Radien ist,

$$\text{d. h. } \delta = \frac{r_r - r_f}{r_r}.$$

**10.** Verfahren nach einem der vorangehenden Ansprüche, wobei angenommen wird, dass das Schlupfgefälle sowohl am ersten als auch am zweiten angetriebenen Rad das gleiche ist und der Schätzwert der Reibung auf Basis eines Modells entsprechend

$$s_m(t) = s_{f,m}(t) = \begin{pmatrix} \mu_f(t) - \mu_r(t) & 1 \end{pmatrix} \begin{pmatrix} \theta \\ \delta \end{pmatrix}$$

berechnet wird, wobei $\delta$ die relative Differenz zwischen dem Vorder- und dem Hinterrad bezüglich der Radien ist,

$$\text{d. h. } \delta = \frac{r_r - r_f}{r_r}.$$

**11.** Verfahren nach einem der vorangehenden Ansprüche, wobei die Drehmomentverteilung geändert wird, wenn Drehmoment-Verteilungswerte in dem Bereich von 0,5 liegen.

**12.** Verfahren nach einem der vorangehenden Ansprüche, wobei ein Wert für eine gewünschte Drehmomentverteilung in Abhängigkeit von der aktuellen Drehmomentverteilung zwischen dem ersten und dem zweiten angetriebenen Rad erzeugt wird.

**13.** Verfahren nach einem der vorangehenden Ansprüche, wobei ein Wert für eine gewünschte Drehmomentverteilung in Abhängigkeit von der aktuell verfügbaren Reibung für das erste und das zweite angetriebene Rad erzeugt wird.

**14.** Verfahren nach einem der vorangehenden Ansprüche, wobei ein Wert für eine gewünschte Drehmomentverteilung erzeugt und in einen DrehmomentverteilungsÄnderungsmechanismus in einer Getriebekupplung mit einer variablen Drehmomentverteilung eingegeben wird.

**15.** Verfahren nach einem der vorangehenden Ansprüche, wobei die ersten und die zweiten angetriebenen Räder Vorderräder bzw. Hinterräder bei einem Fahrzeug mit Allradantrieb sind.

**16.** Vorrichtung zum Bestimmen von Reibung zwischen einer Oberfläche und einem Reifen eines angetriebenen Rades bei einem mit Rädern versehenen Fahrzeug, das ein erstes und ein zweites angetriebenes Rad hat, die Einrichtungen zum Durchführen der Schritte und Funktionen nach einem der vorangehenden Ansprüche umfasst.

**17.** Computerprogrammerzeugnis zum Bestimmen von Reibung zwischen einer Oberfläche und einem Reifen eines angetriebenen Rades bei einem Radfahrzeug, das ein erstes und ein zweites angetriebenen Rad hat, das Computerprogramm-Codeteile umfasst, die so eingerichtet sind, dass sie ein Datenverarbeitungssystem anweisen, die Schritte und Funktionen nach einem der vorangehenden Ansprüche durchzuführen.

**18.** Getriebekupplung zur Verteilung eines Drehmomentes zwischen einer ersten und einer zweiten Radachse bei einem mit Rädern versehenen Fahrzeug (402), das ein erstes und ein zweites angetriebenes Rad hat, wobei die Getriebekupplung (404, 406) einen Mechanismus zum Ändern der Verteilung von Drehmoment zwischen der ersten und der zweiten Radachse sowie einen Steuermechanismus zum Steuern der Änderung von Drehmomentverteilung aufweist, und der Steuermechanismus umfasst:

eine Einrichtung zum Bestimmen von Reibung zwischen einer Oberfläche und einem Reifen eines angetriebenen Rades bei dem mit Rädern versehenen Fahrzeug;
eine Einrichtung zum Berechnen von Schlupfwerten eines ersten und eines zweiten angetriebenen Rades in Abhängigkeit von der Winkelgeschwindigkeit der ersten und der zweiten angetriebenen Räder;
eine Einrichtung zum Berechnen normalisierter Traktionskräfte der ersten und der zweiten angetriebenen Räder in Abhängigkeit von der Drehmomentverteilung zwischen den ersten und den zweiten angetriebenen Rädern;
eine Einrichtung zum Berechnen eines Reibungs-Schätzwertes $\theta_1$, $\theta_2$ (404) jeweils für die ersten und die zweiten angetriebenen Räder in Abhängigkeit von einer vorgegebenen Beziehung zwischen dem berechneten Schlupf und den berechneten normalisierten Traktionskräften,

eine Einrichtung (416) zum Bewerten der Reibung und der aktuellen Drehmomentverteilung zwischen der ersten und der zweiten Radachse.

**19.** Getriebekupplung nach dem vorangehenden Anspruch, die des Weiteren eine Einrichtung zum Erzeugen eines Drehmomentverteilungs-Steuersignals (418) in Abhängigkeit von der Reibung und der aktuellen Drehmomentverteilung umfasst.

**20.** Getriebekupplung nach dem vorangehenden Anspruch, wobei das Drehmomentverteilungs-Steuersignal (418) in den Mechanismus zum Ändern der Verteilung von Drehmoment eingegeben wird.

**21.** Getriebekupplung nach einem vorangehenden Ansprüche 18 bis 21, die des Weiteren Einrichtungen zum Durchführen der Schritte und Funktionen nach einem der Ansprüche 1-17 umfasst.

**Revendications**

**1.** Procédé de détermination d'un frottement entre une surface et un pneu d'une roue motrice d'un véhicule à roues motrices ayant une première et une seconde roue motrice, comprenant les étapes consistant à :

> calculer des valeurs de patinage (304) d'une première et d'une seconde roue motrice selon la vitesse angulaire (312) desdites première et seconde roues motrices ;

> calculer des forces de traction normalisées (306) desdites première et seconde roues motrices selon la répartition de couple (314) entre lesdites première et seconde roues motrices ;

> calculer une estimation de frottement $\theta_1$, $\theta_2$ (308) pour chacune desdites première et seconde roues motrices selon une relation prédéterminée entre ledit patinage calculé (304) et lesdites forces de traction normalisées calculées (306).

**2.** Procédé selon la revendication 1, dans lequel lesdites valeurs de patinage sont calculées d'une manière correspondant à la différence entre la vitesse angulaire (312) desdites première et seconde roues motrices, respectivement, divisée par la vitesse angulaire de ladite seconde roue motrice.

**3.** Procédé selon l'une quelconque des revendications précédentes, dans lequel lesdites valeurs de patinage $s_m$ sont calculées d'une manière correspondant à la relation

$$s_m = \frac{\omega_f - \omega_r}{\omega_r},$$

où $\omega_f$ et $\omega_r$ sont les vitesses de rotation des roues avant et arrières, respectivement.

**4.** Procédé selon l'une quelconque des revendications précédentes, dans lequel lesdites forces de traction normalisées $\mu$ sont calculées d'une manière correspondant aux relations

$$\mu_{f,m} = \frac{T_f}{2rN_f}$$

$$\mu_{r,m} = \frac{T_r}{2rN_r}$$

où r, $N_f$ et $N_r$ sont le rayon des roues et les forces normales au niveau des essieux avant et arrière, respectivement.

5. Procédé selon l'une quelconque des revendications précédentes, dans lequel lesdites estimations de frottement sont calculées à l'aide d'une relation entre le patinage et la force de traction normalisée selon la différence entre les forces de traction normalisées desdites première et seconde roues motrices, respectivement.

6. Procédé selon l'une quelconque des revendications précédentes, dans lequel lesdites estimations de frottement sont calculées à l'aide d'une relation linéaire entre le patinage s(t) et la force de traction normalisée $\mu(t)$ desdites première et seconde roues motrices, respectivement, correspondant à

$$s_f(t) = \mu_f(t)\theta_f$$

$$s_r(t) = \mu_r(t)\theta_r$$

où les indices f et r indiquent les essieux avant et arrières, respectivement.

7. Procédé selon la revendication précédente, dans lequel les paramètres d'estimation de frottement $\theta_f$ et $\theta_r$ sont déterminés à l'aide d'un modèle de régression.

8. Procédé selon l'une quelconque des revendications précédentes, dans lequel le calcul du patinage est en outre amélioré d'une manière correspondant à la relation entre le patinage réel $s_m$ et le patinage mesuré $s_f$, $s_r$

$$s_m(t) \approx s_f(t) - s_r(t) + \delta \, ,$$

où $\delta$ est la différence relative de rayon entre la roue avant et la roue arrière,
c'est-à-dire que

$$\delta \approx \frac{r_r - r_f}{r_r} \, .$$

9. Procédé selon l'une quelconque des revendications précédentes, dans lequel l'estimation de le frottement est calculée sur la base d'un modèle correspondant à

$$s_m(t) = s_{f,m}(t) = \begin{pmatrix} \mu_f(t) & -\mu_r(t) & 1 \end{pmatrix} \begin{pmatrix} \theta_f \\ \theta_r \\ \delta \end{pmatrix} ,$$

où $\delta$ est la différence relative de rayon entre la roue avant et la roue arrière,
c'est-à-dire que

$$\delta = \frac{r_r - r_f}{r_r} \, .$$

10. Procédé selon l'une quelconque des revendications précédentes, dans lequel il est supposé que la pente de patinage est la même au niveau desdites première et seconde roues motrices, et dans lequel l'estimation du frottement est calculée sur la base d'un modèle correspondant à

$$s_m(t) = s_{f,m}(t) = \left( \mu_f(t) - \mu_r(t) \quad 1 \right) \begin{pmatrix} \theta \\ \delta \end{pmatrix},$$

où $\delta$ est la différence relative de rayon entre la roue avant et la roue arrière,
c'est-à-dire que

$$\delta = \frac{r_r - r_f}{r_r}.$$

11. Procédé selon l'une quelconque des revendications précédentes, dans lequel la répartition de couple est changée lorsque les valeurs de répartition de couple sont de l'ordre de 0,5.

12. Procédé selon l'une quelconque des revendications précédentes, dans lequel une valeur d'une répartition de couple souhaitée est générée selon la répartition de couple actuelle entre lesdites première et seconde roues motrices.

13. Procédé selon l'une quelconque des revendications précédentes, dans lequel une valeur d'une répartition de couple souhaitée est générée selon le frottement disponible actuel pour lesdites première et seconde roues motrices.

14. Procédé selon l'une quelconque des revendications précédentes, dans lequel une valeur d'une répartition de couple souhaitée est générée et transmise à un mécanisme de variation de répartition de couple dans un couplage de transmission ayant une répartition de couple variable.

15. Procédé selon l'une quelconque des revendications précédentes, dans lequel lesdites première et seconde roues motrices sont les roues avant et les roues arrières, respectivement, dans un véhicule à quatre roues motrices.

16. Appareil de détermination d'un frottement entre une surface et un pneu d'une roue motrice dans un véhicule à roues motrices ayant une première et une seconde roues motrices, comprenant un moyen destiné à effectuer les étapes et les fonctions selon l'une quelconque des revendications précédentes.

17. Produit de programme informatique destiné à déterminer un frottement entre une surface et un pneu d'une roue motrice d'un véhicule à roues ayant une première et une seconde roues motrices, comprenant des parties de code de programme informatique adaptées pour diriger un système de traitement de données afin d'effectuer les étapes et les fonctions selon l'une quelconque des revendications précédentes.

18. Couplage de transmission destiné à la répartition d'un couple entre un premier et un second essieux d'un véhicule à roues (402) ayant une première et une seconde roues motrices, le couplage de transmission (404, 406) ayant un mécanisme destiné à faire varier la répartition du couple entre lesdits premier et second essieux et un mécanisme de commande destiné à contrôler ladite variation de répartition de couple, dans lequel ledit mécanisme de commande comprend :

➤ un moyen de détermination d'un frottement entre une surface et un pneu d'une roue motrice dudit véhicule à roues ;

➤ un moyen de calcul de valeurs de patinage d'une première et d'une seconde roue motrice selon la vitesse angulaire desdites première et seconde roues motrices ;

➤ un moyen de calcul de forces de traction normalisées desdites première et seconde roues motrices selon la répartition de couple entre lesdites première et seconde roues motrices ;

➤ un moyen de calcul d'une estimation de frottement $\theta_1$, $\theta_2$ (404) pour chacune desdites première et seconde roues motrices selon une relation prédéterminée entre ledit patinage calculé et lesdites forces de traction normalisées calculées

> un moyen (416) d'évaluation dudit frottement et de la répartition de couple actuelle entre lesdits premier et second essieux.

**19.** Couplage de transmission selon la revendication précédente, comprenant en outre un moyen de génération d'un signal de commande de répartition de couple (418) selon ledit frottement et ladite répartition de couple actuelle.

**20.** Couplage de transmission selon la revendication précédente, dans lequel ledit signal de commande de répartition de couple (418) est transmis au mécanisme de variation de la répartition de couple.

**21.** Couplage de transmission selon l'une quelconque des revendications précédentes 18 à 21, comprenant en outre un moyen permettant d'effectuer les étapes et les fonctions selon l'une quelconque des revendications 1 à 17.

Torque after gear box

True µ-level

**Figure 2  Torque and friction profiles used throughout the simulations.**

**Figure 3  Wheel slip and torque distribution.**

**Estimated Θ**

Figure 4     Estimated slip curve parameters for different constant torque distributions.

Figure 5 Estimated slip curve parameter using a varying torque distribution.

<u>312</u> ω

<u>302</u> SAMPLING ANGULAR VELOCITY SIGNALS FROM DRIVEN WHEELS

<u>304</u> CALCULATING SLIP VALUES OF DRIVEN WHEELS

<u>314</u> TORQUE DISTRIBUTION γ

<u>306</u> CALCULATING NORMALISED TRACTION FORCES OF DRIVEN WHEELS

<u>316</u> RELATION BETWEEN SLIP AND NORMALISED TRACTION FORCES

<u>308</u> CALCULATING FRICTION ESTIMATE

<u>318</u> FRICTION ESTIMATE PARAMETER

<u>320</u> TORQUE DISTRIBUTION CONTROL SIGNAL

<u>310</u> CALCULATING OR SELECTING SET POINT VALUE FOR TORQUE DISTRIBUTION

**FIG 6**

404

405

CONTROL
INPUT 408

ω

402

ROAD FRICTION
ESTIMATION

412

θ 410

ω

ω

FL

FR

404

EVALUATION OF
FRICTION AND
TORQUE

414

RL

ω

ω

415

TORQUE
DISTRIBUTION
CONTROL

416

406

RR

418

FIG 7